# EUROPÄISCHE PATENTSCHRIFT

(11) **EP 0 541 918 B1**
(45) Veröffentlichungstag und Bekanntmachung des Hinweises auf die Patenterteilung: **14.12.1994**
(21) Anmeldenummer: 92114602.3
(22) Anmeldetag: 27.08.1992
(51) Int. Cl.: F16B 7/04, E04B 2/76

(54) **Querverbindung von Profilstäben**
Perpendicular joint for sectional bars
Joint perpendiculaire pour profilés

(30) Priorität: 12.11.1991 DE 4137079
(43) Veröffentlichungstag der Anmeldung: 19.05.1993
(73) Patentinhaber: Kahl, Helmut, D-32457 Porta Westfalica (DE)
(72) Erfinder: Kahl, Helmut, D-32457 Porta Westfalica (DE)
(74) Vertreter: Elbertzhagen, Otto

(56) Entgegenhaltungen:
- EP-A- 0 136 431
- DE-A- 3 819 609
- DE-B- 1 290 328

## Beschreibung

Die Erfindung bezieht sich auf eine Querverbindung von mit hinterschnittenen, durchlaufenden Längsnuten versehenen Profilstäben der im Gattungsbegriff des Patentanspruchs 1 näher bezeichneten Art.

Aus der EP-0 136 431B1 ist eine solche Querverbindung von Profilstäben bekannt, bei der die auftretenden Zugkräfte zwischen den beiden Profilstäben über den Gewindebolzen übertragen werden, der dazu einen formschlüssig in die Längsnut des zweiten Profilstabes eingreifenden Kopf hat. Der Nachteil dieser bekannten Querverbindung liegt darin, daß bei auf die Profilstäbe einwirkenden Querkräften, die in der Regel in der von den beiden Profilstäben aufgespannten Ebene auftreten, wegen des relativ kleinen Hebelarms zwischen dem Gewindebolzen und dem Abstützungsbereich am Rand der Stirnseite des stumpf aufgesetzten Profilstabes erhebliche Zugkräfte von dem zentral angeordneten Gewindebolzen aufgenommen werden müssen. Außerdem muß bei der bekannten Ausführung der Gewindebolzen durch eine Montagebohrung des quer dazu liegenden Profilstabes hindurch mit einem Werkzeug angezogen werden, dies ist zumindest dann unpraktisch, wenn auf der dem aufgesetzten Profilstab gegenüberliegenden Seite des dazu querverlaufenden Profilstabes kein Platz zur Verfügung steht.

Der Erfindung liegt deshalb die Aufgabe zugrunde, eine Querverbindung von Profilstäben der eingangs genannten Art zu schaffen, mit der wenigstens in Richtung der von den beiden Profilstäben aufgespannten Ebene höhere Lastmomente bewältigt werden können und die eine Bedienung auf der Anschlußseite des angesetzten Profilstabes ermöglicht.

Diese Aufgabe wird bei einer Querverbindung von Profilstäben der gattungsbildenden Art nach der Erfindung durch die kennzeichnenden Merkmale des Patentanspruchs 1 gelöst.

Für die Erfindung ist es von Bedeutung, daß der Kraftschluß aus der axialen Mitte des quer aufgesetzten Profilstabes heraus verlegt ist, denn der Nutenstein mit seinem Formkopf und der Druckschraube liegt außerhalb der axialen Mitte des stumpf aufgesetzten Profilstabes. Zudem ist die für das Anziehen oder Lösen der Querverbindung zu betätigende Druckschraube im Nutenstein von der Seite des durchgehenden Profilstabes aus erreichbar, an der der querverlaufende Profilstab angesetzt wird. Die erfindungsgemäße Querverbindung läßt sich deshalb besonders vorteilhaft bei kragender Anordnung des quer angesetzten Profilstabes unter schwierigen räumlichen Bedingungen einsetzen. Insbesondere eignet sich das erfindungsgemäße Verbindungssystem für Profilstäbe aus Metall, vor allem Leichtmetall, welches gegen hohe Flächenpressung empfindlich ist.

In vorteilhafter Ausgestaltung nach der Erfindung hat die Verbindung einen symmetrischen Aufbau, wozu der stirnseitig am ersten Profilstab vorstehende Kopf des Gewindebolzens in Gestalt eines Hammerkopfes zwei einander gegenüberliegende Vorsprünge hat, denen jeweils einer von in einander gegenüberliegende Längsnuten des ersten Profilstabes hineinragende Nutensteine mit Formköpfen und Druckschrauben zugeordnet ist. Die Querverbindung hat dann eine in allen Richtungen der von den Profilstäben aufgespannten Ebene erhöhte Steifigkeit.

Weiter ist es vorteilhaft, wenn der Formkopf am Nutenstein durch einander gegenüberliegende Abflachungen eine Breite hat, die kleiner als die Öffnungsweite der Längsnut des zweiten Profilstabes ist. Es ist hierbei nicht erforderlich, den Formkopf am Nutenstein von der Stirnseite des betreffenden Profilstabes her in die Längsnut einzuführen, vielmehr kann die Formschlußsicherung des Formkopfes auch dann erreicht werden, wenn der Formkopf mit seinen beidseitigen Abflachungen fluchtend in die Längsnut des Profilstabes eingeführt und dann um 90° gedreht wird.

In weiterer vorteilhafter Ausführung nach der Erfindung hat der Nutenstein eine Breite, die kleiner als die Öffnungsweite der Längsnut des ersten Profilstabes ist, und weist eine Höhe auf, die gleich der Tiefe dieser Längsnut ist, wobei der Formkopf sich über einen Teil der Höhe des Nutensteins erstreckt und daneben der Austritt der Druckschraube an einer benachbarten Stirnseite des Nutensteins angeordnet ist. Somit läßt sich auch der Nutenstein leicht von der Seite her in die Längsnut des ersten Profilstabes einführen. In diesem Zusammenhang ist es von weiterem Vorteil, wenn die Abflachungen am Formkopf des Nutensteins in dessen Breitenrichtung liegen, der Nutenstein kann dann in die vorausgerichteten Profilstäbe nachträglich ohne besondere Schwierigkeiten eingefügt werden. Weiter ist hierdurch der Nutenstein bei Betätigung der Druckschraube gegen ein Mitdrehen in der Längsnut des ersten Profilstabes gesichert.

Die neue Querverbindung kann vor allem dann bedienungsfreundlich gelöst oder gespannt werden, wenn die Druckschraube an der dem Formkopf gegenüberliegenden Stirnseite des Nutensteins zugänglich ist. Entweder steht hierbei die Druckschraube über die äußere Stirnseite des Nutensteins über oder ist zumindest an dieser Stelle über eine durchgeführte Gewindebohrung erreichbar.

Gemäß der Erfindung entfällt eine formschlüssige Sicherung des Kopfes des Gewindebolzens, der stirnseitig am ersten Profilstab vorsteht, in der Längsnut des zweiten Profilstabes. Folglich kann vorteilhaft dieser Kopf des Gewindebolzens eine Breite haben, die kleiner als die Öffnungsweite der Längsnut des zweiten Profilstabes ist, lediglich soll eine Verdrehsicherung des Gewindebolzens durch den Eingriff in die Längsnut des betreffenden Profilstabes erzielt werden.

Vorzugsweise ist die Achsrichtung der Druckschraube des Nutensteins gegenüber der des Gewindebolzens im ersten Profilstab geneigt, indem sie sich von der innenliegenden Stirnseite benachbart dem Formkopf des Nutensteins bis zu dessen gegenüberliegender Stirnseite im äußeren Bereich erstreckt. Dies erleichtert die Zugänglichkeit der Druckschraube weiter.

Eine Eingriffssicherung zwischen der Druckschraube des Nutensteins und dem Kopf des Gewindebolzens kann dadurch erreicht werden, daß der Vorsprung am Gewindebolzen an der Beaufschlagungsseite für die Druckschraube des Nutensteins eine kalottenartige Ausnehmung hat.

Ferner liegt eine vorteilhafte Ausgestaltung nach der Erfindung darin, am Kopf des Gewindebolzens des ersten Profilstabes einen axial vorstehenden Zapfen anzuordnen, der in eine angepaßte Bohrung am Grund der Längsnut des zweiten Profilstabes eingreift. Damit ist die Ausrichtung des quer aufzusetzenden Profilstabes bei der Montage vereinfacht, über dies können auf den angesetzten Profilstab wirkende Querkräfte unmittelbar über den Kopf des Gewindebolzens auf den durchgehenden Profilstab übertragen werden.

Die Erfindung wird nachstehend anhand der Zeichnung an einem Ausführungsbeispiel noch näher erläutert. Dabei zeigen:
- Fig. 1: eine perspektivische, gesprengte Darstellung einer Querverbindung von Profilstäben mit den zugehörigen Einzelteilen,
- Fig. 2: eine teilgeschnittene Seitansicht der Verbindungsstelle entsprechend den zusammengefügten Teilen der Querverbindung nach Fig. 1 und
- Fig. 3: die Draufsicht auf die Verbindungsstelle nach Fig. 2.

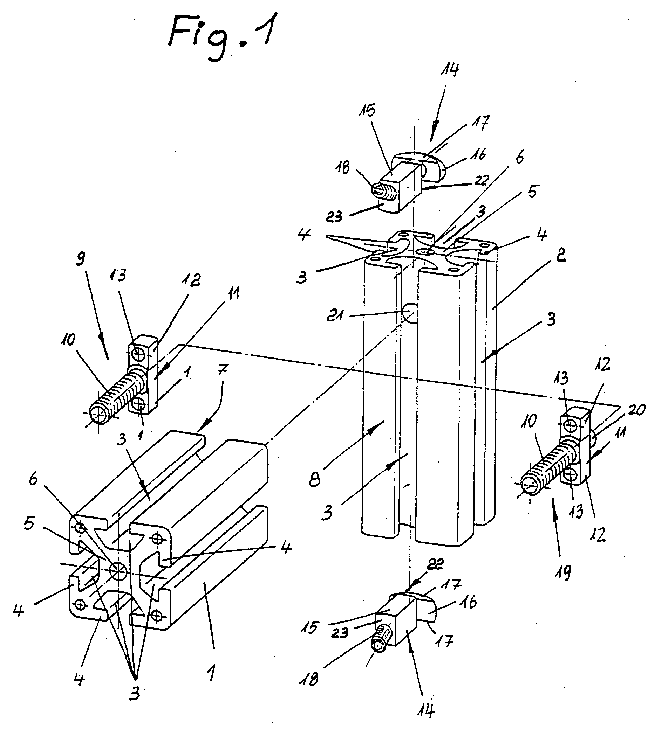

Im einzelnen entnimmt man Fig. 1 einen ersten Profilstab 1 und einen zweiten Profilstab 2, von denen der erste Profilstab 1 unter einem 90° Winkel an den durchgehenden, zweiten Profilstab 2 stumpf ansetzbar ist. Die beiden Profilstäbe 1 und 2 weisen die gleiche Querschnittsform auf, welche im wesentlichen quadratisch oder rechteckig ist. An jeder der vier Längsseiten haben die Profilstäbe 1 und 2 durchgehende Längsnuten 3, die entsprechend bis zu den endseitigen Stirnseiten durchlaufen. Die Profilnuten 3 sind hinterschnitten und haben im Innenbereich im Querschnitt in etwa eine sich nach innen hin verjüngende Trapezform, wobei im Bereich der längeren Trapezseite eine durch in Umfangsrichtung vorstehende Profilwandungen 4 eine Nutöffnung mit verengter Öffnungsweite besteht. Die Profilstäbe 1 und 2 haben weiter nach innen hin einen Kern 5, durch den hindurch sich eine axiale Bohrung 6 erstreckt, die zumindest im stirnseitigen Bereich als Gewindebohrung 24 (Fig. 2) ausgebildet sein kann. Ist der erste Profilstab 1 mit seiner einen Stirnseite 7 stumpf auf die betreffende Längsseite 8 des zweiten Profilstabes 2 aufgesetzt, fluchtet die an dieser Längsseite 8 des zweiten Profilstabes 2 angeordnete, durchlaufende Längsnut 3 mit zwei Längsnuten 3 an einander gegenüberliegenden Längsseiten des ersten Profilstabes 1, diese fluchtenden Längsnuten 3 beider Profilstäbe 1 und 2 liegen folglich in einer Ebene.

Zu den Verbindungsmitteln gehört als erstes ein Gewindebolzen 9, der von der Stirnseite 7 her in die axiale Bohrung 6 des ersten Profilstabes 1 eingeschraubt wird, wozu diese Bohrung 6 zur Stirnseite 7 des ersten Profilstabes 1 hin als Gewindebohrung 24 (Fig. 2) ausgeführt ist. Der Gewindebolzen 9 hat im Anschluß an einen Gewindeansatz 10 einen Kopf 11, der nach Art eines Hammerkopfes ausgebildet ist und entsprechend an zwei einander gegenüberliegenden Seiten relativ zum Gewindeansatz 10 radial vorstehende Vorsprünge 12 hat. Der in Montageanordnung an der Stirnseite 7 des ersten Profilstabes 1 mit seinem Kopf 11 vorstehende Gewindebolzen 9 taucht in zusammengefügter Lage in die Längsnut 3 des zweiten Profilstabes 2 an dessen Längsseite 8 ein, wobei er eine Höhe hat die in etwa der Tiefe dieser Längsnut 3 entspricht, und eine Breite aufweist, die etwas geringer als die Öffnungsweite der Längsnut 3 ist. Die Länge des Kopfes 11 in Diametralrichtung des Gewindebolzens 9 ist kürzer als die Seitenlänge der Querschnittsfigur des ersten Profilstabes 1, so daß in montierter Anordnung zwischen den beiden Profilstäben 1 und 2 der Kopf 11 des Gewindebolzens 9 nicht sichtbar ist. Zum anderen ist der Kopf 11 des Gewindebolzens 9 in der Längsnut 3 des zweiten Profilstabes 2 gegen Verdrehen ausreichend gesichert. An der der Mündung der Längsnuten 3 des ersten Profilstabes 1 gegenüberliegenden Seite weist der Kopf 11 des Gewindebolzens 9 kalottenartige Ausnehmungen 13 auf, auf deren Bedeutung nachstehend noch eingegangen werden wird.

Zum zweiten gehören zu den Verbindungselementen Nutensteine 14, die einen im wesentlichen kubischen Körper 15 haben, dessen Breite der Einführweite und dessen Höhe der Tiefe der Längsnuten 3 des ersten Profilstabes 1 entspricht. An den Körper 15 der Nutensteine 14 ist jeweils ein Formkopf 16 einstückig angearbeitet, dessen Querschnittsform in Breitenrichtung des Körpers 15 der Innenkontur der Längsnut 3 an der Längsseite 8 des zweiten Profilstabes 2 derart angepaßt ist, daß über den Formkopf 16 der jeweilige Nutenstein 14 in dieser Längsnut 3 senkrecht zur Längsachse des zweiten Profilstabes 2 durch Formschluß gesichert werden kann. Der Formkopf 16 der Nutensteine 14 hat in Breitenrichtung des Körpers 15 der Nutensteine 14 bzw. parallel dazu Abflachungen 17, deren Abstand kleiner als die Öffnungsweite der Längsnut 3 des zweiten Profilstabes 2 ist, damit der Formkopf 16 durch die Nutöffnung eingeführt und dann in der Längsnut 3 nach Verdrehen um 90° gesichert werden kann. Die Oberseite des Körpers 15 und die Seite der einen Abflachung 17 am Formkopf 16 der Nutensteine 14 liegen in einer Ebene, die in zusammengefügter Anordnung mit der betreffenden Außenseite des ersten Profilstabes 1 bündig ist. Durch den Körper 15 der Nutensteine 14 tritt eine Druckschraube 18 hindurch, die an einer Stirnseite 22 benachbart dem Formkopf 16 des Nutensteins 14 austritt und von der am Körper 15 gegenüberliegenden Stirnseite 23 her zugänglich ist. An dieser Stirnseite 23 kann die Druckschraube 18 zwecks einfacheren Zugriffs vorstehen; soll dagegen die Druckschraube 18 nicht sichtbar sein, wird sie zweckmäßig als Madenschraube ausgeführt. Bei in der betreffenden Längsnut 3 des ersten Profilstabs 1 einliegendem Körper 15 der Nutensteine 14 liegt die rückwärtige Stirnseite 23 frei, somit ist dann der Zugang zu dem Betätigungsende der Druckschraube 18 mittels eines Werkzeuges gegebenenfalls durch die betreffende Längsnut 3 des ersten Profilstabes 1 hindurch möglich. In der Einbaulage liegt die Achse der Druckschraube 18 leicht geneigt zu der Längsachse des ersten Profilstabes 1, auch das erleichtert die Betätigung der Druckschraube 18, weil sich der Neigungswinkel zu der rückwärtigen Stirnseite 23 des Körpers 15 des Nutensteins 14 nach außen hin öffnet.

In der montierten Anordnung liegt der Formkopf 16 der Nutensteine 14 in der Längsnut 3 des zweiten Profilstabes 2 unmittelbar neben dem benachbarten Stirnende des Kopfes 11 an dem Gewindebolzen 9, so daß die innere Stirnseite 22 am Körper 15 des Nutensteins 14 die nach außen hinweisende Seite des Vorsprungs 12 des Kopfes 11 überdeckt. Die Druckschraube 18 des Nutensteins 14 greift dabei in die betreffende Ausnehmung 13 am Kopf 11 ein, und die von der Druckschraube 18 beim Anziehen bewirkte Druckspannung ruft eine Zugspannung in dem Nutenstein 14 hervor, die infolge der Abstützung der Druckschraube 18 am Kopf 11 des Gewindebolzens 9 zu einem Verspannen des ersten Profilstabes 1 mit seiner Stirnseite 7 an der Längsseite 8 des zweiten Profilstabes 2 führt. Die Achse der Zugspannung liegt dabei außerhalb der Mitte des ersten Profilstabes 1, damit sind bei kippender Belastung der Profilstäbe 1 und 2 relativ zueinander die Hebelarme der Reaktionskräfte vergrößert, was letztlich bei entsprechenden Lastmomenten die zu übertragenden Kräfte relativ verringert.

Für den Gewindebolzen 9 kann eine abgewandelte Ausführung zum Einsatz kommen, die in der Darstellung rechts wiedergegeben ist. Hier trägt der Gewindebolzen die Bezugsziffer 19, und er unterscheidet sich in dieser Ausführung nur insoweit von dem Gewindebolzen 9, als in axialer Verlängerung des Gewindeansatzes 10 am Kopf 11 ein vorstehender Zapfen 20 angeordnet ist, der in der Einbaulage in eine formschlüssig angepaßte Bohrung 21 am Grund der Längsnut 3 an der Längsseite 8 des zweiten Profilstabes 2 eingreift. Hierdurch ist eine Vorfixierung des ersten Profilstabes 1 an dem zweiten Profilstab 2 möglich, außerdem ist die Widerstandsfähigkeit gegen auftretende Scherkräfte erhöht.

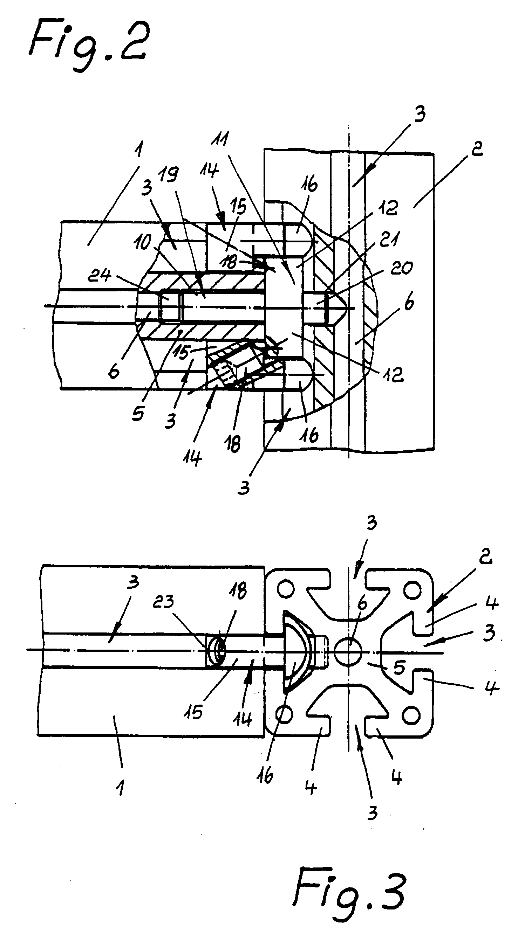

Die Fig. 2 und 3 veranschaulichen die Querverbindung der beiden Profilstäbe 1 und 2 in zusammengefügter Anordnung. Vor allem erkennt man in Fig. 2 die Lage der jeweiligen Druckschraube 18 in dem betreffenden Körper 15 des Nutensteins 14 welche die Innenseite des benachbarten Vorsprungs 12 des Kopfes 11 am Gewindebolzen 19 beaufschlagt. Weiter macht Fig. 2 die unmittelbar benachbarte Lage der in die Längsnut 3 des zweiten Profilstabes 2 eingreifenden Formköpfe 16 der Nutensteine 14 neben den Stirnseiten des Kopfes 11 des Gewindebolzens 19 deutlich. Da die Außenseiten der Nutensteine 14 und ihrer Formköpfe 16 mit der betreffenden Längsseite des ersten Profilstabes 1 fluchten, ergeben sich im Eckbereich zwischen dem ersten Profilstab 1 und dem zweiten Profilstab 2 keine störenden Vorsprünge. Aus Fig. 3 ist die Zugänglichkeit der Druckschraube der Nutensteine 14 durch die betreffende Längsnut 3 des ersten Profilstabes 1 ersichtlich. Die Druckschraube 18 in Gestalt einer Madenschraube ist zweckmäßig mit einem Innensechskant versehen, so daß sie mit einem Sechskantschlüssel betätigt werden kann, der durch den Öffnungsschlitz der Längsnut 3 des Profilstabes 1 hindurchpaßt.

## Patentansprüche

1. Querverbindung von mit hinterschnittenen, durchlaufenden Längsnuten (3) versehenen Profilstäben (1, 2), insbesondere aus Leichtmetall, von denen der erste (1) mit einer Stirnseite (7) stumpf auf eine Längsseite (8) des zweiten Profilstabes (2) aufgesetzt ist, wobei an der Stirnseite (7) des ersten Profilstabes (1) der Kopf (11) eines in eine axiale Gewindebohrung (24) dieses Profilstabes (1) eingeschraubten Gewindebolzens (9, 19) vorsteht, der in eine mit einer Längsnut (3) des ersten Profilstabes (1) fluchtende Längsnut (3) des zweiten Profilstabes (2) hineinragt,
dadurch gekennzeichnet,
daß der stirnseitig am ersten Profilstab (1) vorstehende Kopf (11) des Gewindebolzens (9, 19) einen wenigstens einseitig radial überstehenden Vorsprung (12) hat, der auf die von den beiden Längsnuten (3) beider Profilstäbe (1,2) aufgespannte Ebene ausgerichtet ist und auf dem sich eine Druckschraube (18) mit einer in Längsrichtung des ersten Profilstabes (1) wirkenden Kraft oder Kraftkomponente abstützt, die in einem in der Längsnut (3) des ersten Profilstabes (1) liegenden Nutenstein (14) mit einem Formkopf (16) angeordnet ist, der neben dem Kopf (11) des Gewindebolzens (9, 19) formschlüssig in die Längsnut (3) des zweiten Profilstabes (2) eingreift.

2. Querverbindung nach Anspruch 1,
dadurch gekennzeichnet,
daß der stirnseitig am ersten Profilstab (1) vorstehende Kopf (11) des Gewindebolzens (9, 19) in Gestalt eines Hammerkopfes einander gegenüberliegende Vorsprünge (12) hat, denen jeweils einer von ineinander gegenüberliegende Längsnuten (3) des ersten Profilstabes (1) hineinragenden Nutensteine (14) mit Formköpfen (16) und Druckschrauben (18) zugeordnet ist.

3. Querverbindung nach Anspruch 1 oder 2,
dadurch gekennzeichnet,
daß der Formkopf (16) am Nutenstein (14) durch einander gegenüberliegende Abflachungen (17) eine Breite hat, die kleiner als die Öffnungsweite der Längsnut (3) des zweiten Profilstabes (2) ist.

4. Querverbindung nach einem der Ansprüche 1 bis 3,
dadurch gekennzeichnet,
daß der Nutenstein (14) eine Breite hat, die kleiner als die Öffnungsweite der Längsnut (3) des ersten Profilstabes (1) ist, und eine Höhe aufweist, die gleich der Tiefe dieser Längsnut (3) ist, wobei der Formkopf (16) sich über einen Teil der Höhe des Nutensteins (14) erstreckt und daneben der Austritt der Druckschraube (18) an einer benachbarten Stirnseite (22) des Nutensteins (14) angeordnet ist.

5. Querverbindung nach Anspruch 3 und 4,
dadurch gekennzeichnet,
daß die Abflachungen (17) am Formkopf (16) des Nutensteins (14) in dessen Breitenrichtung liegen.

6. Querverbindung nach einem der Ansprüche 1 bis 5,
dadurch gekennzeichnet,
daß die Druckschraube (18) an der dem Formkopf (16) gegenüberliegenden Stirnseite (23) des Nutensteins (14) zugänglich ist.

7. Querverbindung nach einem der Ansprüche 1 bis 6,
dadurch gekennzeichnet,
daß der stirnseitig am ersten Profilstab (1) vorstehende Kopf (11) des Gewindebolzens (9, 19) eine Breite hat, die kleiner als die Öffnungsweite der Längsnut (3) des zweiten Profilstabes (2) ist.

8. Querverbindung nach einem der Ansprüche 1 bis 7,
dadurch gekennzeichnet,
daß die Achsrichtung der Druckschraube (18) des Nutensteins (14) zu der des Gewindebolzens (9, 19) im ersten Profilstab (1) von der rückwärtigen, dem Formkopf (16) gegenüberliegenden Stirnseite (23) des Nutensteins (14) nach innen hin bis zum Austritt an der dem Formkopf (16) benachbarten Stirnseite (22) des Nutensteins (14) geneigt ist.

9. Querverbindung nach einem der Ansprüche 1 bis 8,
dadurch gekennzeichnet,
daß der Vorsprung (12) am Gewindebolzen (9, 19) an der Beaufschlagungsseite für die Druckschraube (18) des Nutensteins (14) eine kalottenartige Ausnehmung (13) hat.

10. Querverbindung nach einem der Ansprüche 1 bis 9,
dadurch gekennzeichnet,
daß am Kopf (11) des Gewindebolzens (9, 19) des ersten Profilstabes (1) ein axial vorstehender Zapfen (20) angeordnet ist, der in eine angepaßte Bohrung (21) am Grund der Längsnut (3) des zweiten Profilstabes (2) eingreift.

## Claims

1. Transverse connection of profiled rods (1, 2), more particularly of light metal, provided with rear-cut continuous longitudinal grooves (3) wherein the first rod (1) is placed endwise with an end side (7) onto a longitudinal side (8) of the second profiled rod (2) wherein at the end side (7) of the first profiled rod (1) there is a protruding head (11) of a threaded bolt (9, 19) screwed into an axial threaded bore (24) of this profiled rod and this head projects into a longitudinal groove (3) of the second profiled rod (2) which is aligned with the longitudinal groove (3) of the first profiled rod,
characterised in that the head (11) of the threaded bolt (9, 19) protruding on an end side on the first profiled rod (1) has a projection (12) which protrudes radially on at least one side and is aligned with the plane spanned by the two longitudinal grooves (3) of the two profiled rods (1, 2) and wherein a pressure screw (18) is supported on this projection with a force or force component acting in the longitudinal direction of the first profiled rod (1) and is mounted in a groove block (14) lying in the longitudinal groove (3) of the first profiled rod (1) and having a shaped head (16) which engages with keyed engagement in the longitudinal groove (3) of the second profiled rod (2) next to the head (11) of the threaded bolt (9, 19)

2. Transverse connection according to claim 1, characterised in that the head (11) of the threaded bolt (9, 19) protruding endwise on the first profiled rod (1) has like a hammer head opposite projections (12) each associated with a groove block (14) having shaped heads (16) and pressure screws (18) and projecting in opposite longitudinal grooves (3) of the first profiled rod (1).

3. Transverse connection according to claim 1 or 2 characterised in that the shaped head (16) on the groove block (14) has through opposite flattened areas (17) a width which is less than the opening width of the longitudinal groove (3) of the second profiled rod (2).

4. Transverse connection according to one of claims 1 to 3 characterised in that the groove block (14) has a width which is less than the opening width of the longitudinal groove (3) of the first profiled rod (1) and has a height which is equal to the depth of this longitudinal groove (3) wherein the shaped head (16) extends over a part of the height of the groove block (14) and in addition the exit of the pressure screw (18) is arranged on an adjoining end side (22) of the groove block (14).

5. Transverse connection according to claim 3 and 4 characterised in that the flattened areas (17) on the shaped head (16) of the groove block (14) lie in the wide direction of same.

6. Transverse connection according to one of claims 1 to 5 characterised in that the pressure screw (18) is accessible on the end side (23) of the groove block (14) opposite the shaped head (16).

7. Transverse connection according to one of claims 1 to 6 characterised in that the head (11) of the threaded bolt (9, 19) projecting at the end side on the first profiled rod (1) has a width which is less than the opening width of the longitudinal groove (3) of the second profiled rod (2)

8. Transverse connection according to one of claims 1 to 7 characterised in that the axial direction of the pressure screw (18) of the groove block (14) is inclined relative to that of the threaded bolt (9, 19) in the first profiled rod (1) from the rear end side (23) of the groove block (14) opposite the shaped head (16) inwards up to the exit on the end side (22) of the groove block (14) adjoining the shaped head (16).

9. Transverse connection according to one of claims 1 to 8 characterised in that the projection (12) on the threaded bolt (9, 19) has a dome-like recess (13) on the biasing side for the pressure screw (18) of the groove block (14).

10. Transverse connection according to one of claims 1 to 9 characterised in that an axially protruding stud (20) is mounted on the head (11) of the threaded bolt (9, 19) of the first profiled rod (1) and engages in a matching bore (21) at the base of the longitudinal groove (3) of the second profiled rod (2).

## Revendications

1. Assemblage transversal de barres profilées (1, 2) pourvues de rainures longitudinales (3) contredépouillées, exécutées notamment en métal léger, le côté frontal (7) de la première barre profilée (1) étant abouté sur un côté longitudinal (8) de la deuxième barre profilée (2), la tête (11) d'un boulon fileté (9, 19) faisant saillie sur le côté frontal (7) de la première barre profilée (1), lequel boulon fileté (9, 19) est vissé dans un trou axial taraudé (24) de cette barre profilée (1) et dépasse sur le côté frontal (7) de la première barre profilée (1) pour s'engager dans une rainure longitudinale (3) de la deuxième barre profilée (2), qui est disposée en alignement avec une rainure longitudinale (3) de la première barre profilée (1),
caractérisé en ce que
la tête (11) du bouton fileté (9, 19), en saillie, frontalement, sur la première barre profilée (1), présente une pièce (12) qui dépasse radialement, au moins sur un côté, laquelle est ajustée sur le plan bridé par les deux rainures longitudinales (3) des deux barres profilées (1, 2), et sur lequel une vis de pression (18) s'appuie avec une force ou une composante de force agissant dans le sens longitudinal de la première barre profilée (1), la vis de pression (18) étant pourvue d'une tête préformée (16) qui est disposée dans un coulisseau (14) logé dans la rainure longitudinale (3) de la première barre profilée (1), cette tête préformée étant en engagement positif, à côté de la tête (11) du bouton fiteté (9; 19), dans la rainure longitudinale (3) de la deuxième barre profitée (2).

2. Assemblage transversal selon la revendication 1,
caractérisé en ce que
la tête (11) du bouton fiteté (9, 19), dépassant sur la partie frontale de la première barre profilée (1), est pourvu de pièces en saillie (12) opposées, en forme de tête de marteau, auxquelles les coulisseaux (14), s'engageant dans les rainures longitudinales (3) de la première barre profilée (1), sont respectivement coordonnés avec têtes préformées (16) et vis de pression (18).

3. Assemblage transversal selon la revendication 1 ou 2,
caractérisé en ce que
la tête (16) du coulisseau (14), en raison de pièces aplaties, disposées à l'opposé l'une de l'autre (17), présente une largeur inférieure à largeur de l'ouverture de la rainure longitudinale (3) de la deuxième barre profilée (2).

4. Assemblage transversal selon l'une des revendications 1 à 3,
caractérisé en ce que
le coulisseau (14) a une largeur inférieure à la largeur de l'ouverture de la rainure longitidinale (3) de la première barre profilée (1) et une hauteur égale à la profondeur de cette rainure longitudinale (3), la tête (16) couvrant une partie de la hauteur du coulisseau (14) et la sortie de la vis de pression (18) étant disposée sur un côté frontat voisin (22) du coulisseau (14).

5. Assemblage transversal selon les revendication 3 et 4,
caractérisé en ce que
les parties aplaties (17) de la tête préformée (16) du coulisseau (14) sont disposées dans le sens de la largeur de celui-ci.

6. Assemblage transversal selon l'une des revendications 1 à 5,
caractérisé en ce que
la vis de pression (18) est accessible sur la partie frontale (23) du coulisseau (14) opposée à la tête préformée (16).

7. Assemblage transversal selon l'une des revendications 1 à 6,
caractérisé en ce que
la tête (11) du boulon fileté (9, 19), faisant saillie sur le côté frontal de la première barre profilée (1), a une largeur inférieure à la largeur de l'ouverture de la rainure longitudinale (3) de la deuxième barre profilée (2).

8. Assemblage transversal selon l'une des revendications 1 à 7,
caractérisé en ce que
l'axe de la vis de pression (18) du coulisseau (14) est inclinée vers l'axe du boulon fileté (9, 19), dans la première barre profilée (1), de la partie frontale arrière (23) du coulisseau (14), opposée à la tête préformée (16), vers l'intérieur jusqu'à la sortie sur la partie frontale (22) du coulisseau (14) voisine de la tête préformée (16).

9. Assemblage transversal selon l'une des revendications 1 à 8,
caractérisé en ce que
la pièce en saillie (12) du boulon fileté (9, 19) est pourvue, du côté soumis à l'action de la vis de pression (18) du coulisseau (14), d'une cavité (13) en forme de calotte.

10. Assemblage transversal selon l'une des revendications 1 à 9,
caractérisé en ce que
la tête (11) du boulon fileté (9, 19) de la première barre profilée (1) est pourvue d'un tenon (20), en saillie axiale, qui s'engage dans une forure (21) adaptée, pratiquée au fond de la rainure longitudinale (3) de la deuxième barre profilée (2).
